Europäisches Patentamt

**European Patent Office**

Office européen des brevets

(11) Publication number: **0 286 444**
**A2**

(12) # EUROPEAN PATENT APPLICATION

(21) Application number: **88303191.6**

(22) Date of filing: **08.04.88**

(51) Int. Cl.⁴: **C 08 G 63/18**
**C 08 G 63/60, C 08 G 63/38,**
**C 09 K 19/38**

(30) Priority: **10.04.87 JP 88408/87**

(43) Date of publication of application:
**12.10.88 Bulletin 88/41**

(84) Designated Contracting States: **DE FR GB**

(71) Applicant: **Chisso Corporation**
**6-32, Nakanoshima 3-chome Kita-ku**
**Osaka-shi Osaka-fu (JP)**

(72) Inventor: **Sugimori, Shigeru**
**2-15, Sakurazutsumi 3-chome**
**Musashinoshi Tokyo (JP)**

(74) Representative: **Lamb, John Baxter et al**
**MARKS & CLERK 57/60 Lincoln's Inn Fields**
**London WC2A 3LS (GB)**

(54) Process for producing a liquid crystalline polyester of a cyclohexanedicarboxylic acid and an aromatic diol.

(57) A process for producing liquid crystalline polymers from cyclohexanedicarboxylic acids and aromatic diols comprise polycondensing the acids and diols, optionally together with a hydroxycarboxylic acid, using a combination of thionyl chloride and pyridine as a condensing agent.

EP 0 286 444 A2

Bundesdruckerei Berlin

## Description

## PROCESS FOR PRODUCING A LIQUID CRYSTALLINE POLYESTER OF A CYCLOHEXANEDICARBOXYLIC ACID AND AN AROMATIC DIOL

The present invention relates to a process for producing polyesters of cyclohexanedicarboxylic acids and aromatic diols and, more particularly, to a process for producing liquid crystalline polyesters thereof.

In recent years, there have been required materials having good heat resistance, rigidity, chemical resistance, etc.; namely, thermoplastic resins for general purpose thermoplastic resin mouolded articles such as fibres, films and moulded articles.

Aromatic polyesters (hereafter referred to as all aromatic polyesters) prepared by the polycondensation of aromatic dicarboxylic acids and aromatic diols meet the above physical requirements to some extent. However, such aromatic polyesters are neither soluble nor fusible materials and also give rise to problems of mouldability. On the other hand, copolymers prepared from polyethylene terephthalate and acetoxybenzoic acid are known liquid crystalline polymers (as discussed below).

Polymers obtained by condensing cyclohexanedicarboxylic acids, in place of aromatic dicarboxylic acids, with aromatic diols are known (Macromolecules, 1986, 19, 1789 - 1796). Such polymers change to liquid crystalline melts in a molten state at high molecular weight and high temperatures and can be spun into very strong fibres. In order to prepare the polymers, however, aromatic diols cannot be used directly but should be first converted into the corresponding diacetates, which gives an uneconomical step in the preparation.

Further, such liquid crystalline polymers have inadequate heat resistance since their thermal deformation temperature is 70 to 80°C. Since the polymers are prepared by the reaction of acid chlorides and alcohols or by the ester exchange method, it is difficult to prepare the products having consistent physical properties.

It has now been found, in accordance with the present invention, that cyclohexane dicarboxylic acids may be polycondensed with aromatic diols, preferably also with an aromatic hydrocarboxylic acid, using as condensing agent a combination of thionyl chloride and pyridine.

The reaction between thionyl chloride ($SOCl_2$) and pyridine and the reaction between the reaction product and aromatic dicarboxylic acids as well as the reaction product thereof and alcohols are shown in Higashi, High Molecular Substance, vol. 35, December, page 1098, 1986 but the direct polycondensation of alicyclic dicarboxylic acids and aromatic diols is not disclosed therein.

According to the invention, therefore, there is provided a process for producing a polyester which comprises condensing a cyclohexanedicarboxylic acid and an aromatic diol using, as cndensing agent, thionyl chloride and pyridine in combination.

In accordance with a preferred feature of the invention, an aromatic hydroxycarboxylic acid is polycondensed together with the dicarboxylic acid and diol.

The cyclohexanedicarboxylic acid is preferably trans- or cis-1,4 cyclohexanedicarboxylic acid, and the armomatic diol is preferably hydroquinone, methylhydroquinone, chlorohydroquinone, phenylhydroquinone or bisphenol A.

The major constituent raw materials of the liquid crystalline polyesters of the invention are cyclohexanedicarboxylic acids and aromatic diols. In addition to the cyclohexanedicarboxylic acids and aromatic diols, aromatic hydroxycarboxylic acids can also be used.

Suitable cyclohexanedicarboxylic acids are trans- or cis-1,2-cyclohexanedicarboxylic acid, trans- or cis-1,3-cyclohexanedicarboxylic acid and trans- or cis-1,4-cyclohexanedicarboxylic acid.

The cyclohexanedicarboxylic acids give units of the following structure in the polyester:

$$- \underset{\underset{O}{\|}}{C} - R^1 - \underset{\underset{O}{\|}}{C} - \qquad (A)$$

(in which $R^1$ represents a trans- or cis-divalent cyclohexylene group).

The aromatic diols are suitably such as to give units of the following structure in the polyester of the invention:

$$- O - R^2 - O - \qquad (B)$$

in which $R^2$ represents a divalent aromatic group or a group $-R^4 - X^1 - R^5-$ (in which $R^4$ and $R^5$ are each a divalent aromatic group and $X^1$ is an oxygen atom, a sulfur atom, a sulfonyl group, a carbonyl group, an alkylene group, an alkylidene group, an ester group, or a direct bond between the groups $R^4$ and $R^5$). The aromatic rings for $R^2$, $R^4$ and $R^5$ may be further substituted with one or more halogen atoms, a hydrocarbyl groups, alkoxy groups, phenyl groups or phenoxy groups. Specific examples of suitable diols include hydroquinone, resorcinol, methylhydroquinone, chlorohydroquinone, acetylhydroquinone, acetoxyhydroquinone, nitrohydroquinone, dimethylaminohydroquinone, 1,4-dihydroxynaphthol, 1,5-dihydroxynaphthol, 1,6-dihydroxynaphthol, 2,6-dihydroxynaphthol, 2,7-dihydroxynaphthol, 2,2'-bis(4-hydroxyphenyl)propane, 2,2'-bis(4-hydroxy-3,5-dimethylphenyl)propane, 2,2'-bis(4-hydroxy-3,5-dichlorophenyl)propane, 2,2'-bis(4-hydroxy-3-methylphenyl)propane, 2,2'-bis(4-hydroxy-3-methylphenyl)propane, 2,2'-bis(4-hydroxy-3-chlorophenyl)propane, bis(4-hydroxyphenyl)methane, bis(4-hydroxy-3,5-dimethylphenyl)methane, bis(4-hydroxy-3,5-dichlorophenyl)methane, bis(4-hydroxy-3,5-dibromophenyl)methane, 1,1-bis(4-hydroxyphenyl)cyclohexane, 4,4'-dihydroxydiphenylbis(4-hydroxyphenyl)-ketonoe, bis(4-hydroxy-3,5-dimethylphenyl)ketone, bis(4-hydroxy-3,5-dichlorophenyl)ketone, bis(4-hydroxy-3,5-dichlorophenyl)-ketone, bis(4-hydroxyphenyl)sulfide, bis(4-hydroxy-3-chlorophenyl)sulfide, bis(4-hydroxyphenyl)sulfone, bis(4-hydroxy-3,5-dichlorophenyl)ether,

0 286 444

1,4-butanediol, 1,4-cyclohexanediol, 1,6-hexamethylenediol, 1,4-cyclohexanedimethanol, xylydene-1,4-diol and 1,3-cyclohexanediol. Mixtures of diols may be employed.

The hydroxycarboxylic acids are suitably such as to give units of the following structure in the polyester of the invention:

$$- O - R^3 - \underset{\underset{O}{\|}}{C} - \quad (C)$$

wherein $R^3$ represents a divalent aromatic group (which may be substituted as described above for the group $R^2$).

Specific examples of hydroxycarboxylic acids include p- or m-hydroxybenzoic acid, syringic acid, vanillic acid, 4-hydroxy-4'-carboxydiphenyl ether, 4-hydroxy-4'-carboxybiphenyl, 2,6-dichloro-p-hydroxybenzoic acid, 2-chloro-p-hydroxybenzoic acid, 2,6-difluoro-p-hydroxybenzoic acid, 2-hydroxy-6-naphthoic acid, 2-hydroxy-3-naphthoic acid and 1-hydroxy-4-naphthoic acid. The hydroxycarboxylic acids may be used alone or in admixture.

Other hydroxycarboxylic acids which may be used are those such as 4-hydroxycyclohexanecarboxylic acid, 3-hydroxycyclohexanecarboxylic acid, β-hydroxyethanol, ω-hydroxycarproic acid, etc.

A polyester of the invention derived from only cyclohexanedicarboxylic acid and aromatic diol will contain 50 mol % of units of formula (A) and 50 mol % of units of formula (B).

Copolyesters of the invention derived from an aromatic oxycarboxylic acid, in addition to a cyclohexanedicarboxylic acid and an aromatic diol, may be derived from any proportions of the reactants but preferably the mole ratio of the units (A) [and hence the units (B)] to the units (C) is from 100:0 to 5:95. When (A) [and (B)] : (C) is 5 : 95, the structural units (A), (B) and (C) respectively from 4.77, 4.77 and 90.46 mol % of the polyester. If the ratio of (A) to (B) is less than the lower limit, the characteristic (liquid crystalline properties upon melting) of the polyester in accordance of the invention is reduced. The molecular weight of the polyester of the present invention is not limited but it is desirable that the logarithmic viscosity (η inh) be not less than 0.1 dl/g when measured at 0.5 g/dl and 50°C in p-chlorophenol. If the logarithmic viscosity is less than 0.1 dl/g, the copolymer only exhibits sufficient strength as a moulding materials with difficulty.

The process of the invention is suitably carried out as follows.

Firstly, the condensing agent is prepared. A definite amount of thionyl chloride is charged into a reactor (equipped with a nitrogen introducing tube, a cooling condenser and a dropping funnel) and a definite amount of pyridine is then added dropwise thereto with ice cooling. The ratio of thionyl chloride to pyridine used and the addition time of the pyridine are not limited but it is preferred that pyridine be used in an amount of 0.01 to 100mols, preferably 0.1 to 10 mols, per 1 mol of thionyl chloride and added dropwise over a period of from one minute to two hours, preferably 3 to 30 minutes.

After maintaining the reaction mixture at about 0°C for 10 minutes to 2 hours (for example 30 minutes) the raw materials (namely the cyclohexanedicarboxylic acid, aromatic diol and, if desired, a solution obtained by separately dissolving the aromatic hydroxycarboxylic acid in pyridine) are added to the reaction mixture. The ratio of the raw materials to pyridine is not limited but reaction is easy to perform when the ratio of g of the raw material/ml of pyridine is not greater than 0.1, preferably about 0.05 to about 0.01. The order of adding each raw material and the time period for addition are not limited but suitably two or three of the raw materials are added sequentially or simultaneously over 5 minutes to 2 hours, preferably 10 minutes to an hour. After completion of the addition, the temperature of the reaction mixture is then elevated to room temperature. After stirring, for example for about 30 minutes, the system is heated at a reaction temperature (80 to 120°C) for 2 to 20 hours, for example 5 hours, to proceed the polycondensation. After completion of the condensation, the reaction mixture is brought back to normal temperature and poured into a non-solvent (methanol) at room temperature. The precipitates formed are filtered off and taken out by suction and further boiled to reflux in a non-solvent and subsequently filtered and dried to give the desired polyester. When using the three raw materials described above, the configuration of the monomers in the polyester is random but the configuration of monomers in the polyester copolymer obtained by adding raw materials used to the reaction mixture stepwise can be controlled, which is similar to the case of "Synthesis of high molecular polyesters using thionyl chloride/pyridine" previously published by the present inventors (Higashi, Sugimori and Mashita, Preview of Meeting of the High Molecular Society, 35, 275, 1986).

Thus, by using the aforesaid these raw materials resulting in the structure (A), (B) and (C) described above in an appropriate combination with the thionyl chlorine-pyridine condensing agent and performing polymerization stepwise, copolymers having a logarithmic viscosity (η inh) higher than those obtained by adding and polymerizing all of the raw materials simultaneously can be obtained.

According to the process of the present invention, there can be easily obtained binary or ternary copolymers of alicyclic polyesters having heat or chemical resistance and high rigidity comprising structural units represented by general formulae (A) and (B) or (A), (B) and (C) described above, having a composition wherein (A) : (B) is 50 : 50 in the former and in the latter, (A) : (C) is 100 : 0 to 5 : 95, in a molar ratio (note: when the structural unit (C) is zero, the molar ratio is identical with the former one) and having a logarithmic viscosity (η inh) of not less than 0.1 dl/g when measured at 0.5 g/dl and 50°C in p-chlorophenol. Further according to the process of the present invention, the aromatic diols represented by general formula (B) described above can be reacted directly with the alicyclic dicarboxylic acids represented by general formula (A) described above, without once acetoxylating the aromatic diols and therefore, the present invention can provide an industrially advantageous process.

3

Furthermore, the compounds in accordance with the present invention show a melting point or glass transition point at 160°C or higher and most of them exhibit liquid crystalline properties.

Hereafter the present invention will be described with reference to the examples below.

Example 1

Production of poly(p-phenylene-trans-1,4-cyclohexanedicarboxylate)

In a 3-necked flask reactor equipped with a nitrogen introducing tube, a cooling condenser and a dropping funnel was charged 1.31 g (11 mmols) of thionyl chloride. Next, nitrogen was flown through the nitrogen introducing tube and ice cooled. While stirring 10 ml of pyridine was added through the dropping funnel over 10 minutes.

After stirring for 30 minutes, a solution of 0.5506 g (5 mmols) of hydroquinone and 0.8610 g (5 mmols) of trans-1,4-cyclohexanedicarboxylic acid in 20 ml of pyridine was added to the mixture over 20 minutes. After stirring at room temperature for 30 minutes, the reaction was carried out at 80°C for 5 hours.

After completion of the reaction, the reaction solution described above was poured into 150 ml of methanol. After the formed precipitates were filtered and taken out by suction, the solid was further boiled to reflux for an hour together with 100 ml of methanol. The solid after reflux was filtered by suction to give a polymer having a logarithmic viscosity (η inh) of 0.74 dl/g.

Examples 2 through 5

Procedures were conducted in a manner similar to Example 1 except that other diols were used, respectively, in place of hydroquinone.

The diols (bisphenol) used and the results (physical properties of polymer) are shown in Table 1.

Table 1

| Example No. | Bisphenol | η inh | m.p. (C-LC) |
|---|---|---|---|
| 2 | Methylhydroquinone | 1.50 | 230 – 260 |
| 3 | Chlorohydroquinone | 1.86 | 255 – 280 |
| 4 | Phenylhydroquinone | 2.26 | 250 – 280 |
| 5 | Bisphenol A | 0.81 | |

Note: (C-LC) indicates a temperature range of liquid crystal (same as in the following tables).

Example 6

Production of poly(chloro-1,4-phenylene-cis-1,4-cyclohexanedicarboxylate)

Procedures were conducted in a manner similar to Example 1 except that cis-1,4-cyclohexanedicarboxylic acid and chlorohydroquinone were used in place of trans-1,4-cyclohexanedicarboxylic acid and hydroquinone, respectively. A logarithmic viscosity (η inh) and a melting point of the obtained polymer were 0.41 and 190 to 230°C, respectively.

Example 7

Procedures were conducted in a manner similar to Example 1 except that 0.2753 g (2.5 mmols) of hydroquinone and a solution of 0.4305 g (2.5 mmols) of trans-1,4-cyclohexanedicarboxylic acid and 0.6907 g (5 mmols) of p-hydroxybenzoic acid in 20 ml of pyridine were used in place of trans-1,4-cyclohexanedicarboxylic acid and hydroquinone, respectively. A logarithmic viscosity of the obtained polymer was 2.10.

Examples 8 through 21

Compounds were produced in a manner quite similar to Example 7 except that 0.3104 g (2.5 mmols) of methylhydroquinone, 0.4655 g (2.5 mmols) of phenylhydroquinone, 0.3614 g (2.5 mmols) of chlorohydroquinone or 0.5708 g (2.5 mmols) of bisphenol A was used in place of hydroquinone; 0.4305 g (2.5 mmols) of trans- or cis-1,4-cyclohexanedicarboxylic acid was used as a component corresponding to trans-1,4-cyclohexanedicarboxylic acid; and 0.6907 g (5 mmols) of p-or m-hydroxybenzoic acid, 0.8407 g (5 mmols) of vanillic acid or 0.8407 g (5 mmols) of syringic acid was used as a component corresponding to p-hydroxybenzoic acid, respectively. The results are shown in Table 2.

Table 2

| Example No. | -Cyclo-hexane-dicarbo-xylic Acid | Phenols | p- or m-Hydroxy-benzoic Acid and Others | η inh | m.p. or C-LC |
|---|---|---|---|---|---|
| 7 | trans- | Hydro-quinone | p- | 2.10 | |
| 8 | " | " | m- | 0.44 | 150 - 210 |
| 9 | " | Methyl-hydro-quinone | p- | 2.90 | 240 - 270 |
| 10 | " | " | " | 3.65[1] | |
| 11 | " | " | " | 4.20[2] | |
| 12 | cis- | Methyl-hydro-quinone | p- | 0.44 | 155 - 210 |
| 13 | trans- | " | Vanillic acid | 1.34 | 240 - 270 |
| 14 | " | " | Syringic acid | 1.46 | 230 - 270 |
| 15 | " | " | m- | 1.01 | 190 - 250 |
| 16 | trans- | Chloro-hydro-quinone | p- | 2.94 | |
| 17 | " | " | m- | 1.05 | 240 - 270 |
| 18 | " | " | Syringic acid | 1.17 | |
| 19 | trans- | Bisphenol A | p- | 1.09 | 235 - 275 |

| Example No. | -Cyclo-hexane-dicarbo-xylic Acid | Phenols | p- or m-Hydroxy-benzoic Acid and Others | η inh | m.p. or C-LC |
|---|---|---|---|---|---|
| 20 | Trans- | Phenyl-hydro-quinone | p- | 2.71 | 210 – 330 |
| 21 | " | " | m- | 1.14 | 225 – 260 |

Notes:  (1) reaction temperature, 100°C

(2) reaction temperature, 200°C

Examples 22 through 30

Procedures were conducted in a manner similar to Example 1 except that trans-1,4-cyclohexanedicarboxylic acid and cis-1,4-cyclohexanedicarboxylic acid were used in combination in various proportions in place of trans-1,4-cyclohexanedicarboxylic acid. The results are shown in Table 3.

Table 3

| Example No. | Cyclohexane-dicarboxylic Acid, trans mmol/cis mmol | Hydroquinone | η inh | m.p. or C-LC |
|---|---|---|---|---|
| 22 | 2.5/2.5 | Methylhydroquinone | 0.51 | 130 – 175 |
| 23 | 2.0/3.0 | " | 0.40 | |
| 24 | 1.75/3.25 | " | 0.37 | |
| 25 | 1.25/3.75 | " | 0.43 | 140 – 175 |
| 26 | 2.5/2.5 | Chlorohydroquinone | 0.95 | |
| 27 | 1.5/3.5 | " | 0.69 | |
| 28 | 3.75/1.25 | Phenylhydroquinone | 0.83 | 190 – 230 |
| 29 | 2.5/2.5 | " | 0.51 | 190 – 220 |
| 30 | 1.25/3.75 | " | 0.36 | 170 – 210 |

Examples 31 through 33

Procedures were conducted in a manner similar to Example 1 except that methylhydroquinone and chlorohydroquinone in combination in various proportions were used in 5 mmols in total, in place of hydroquinone (5 mmols). The results are shown in Table 4.

### Table 4

| Example No. | Methylhydroquinone/ Chlorohydroquinone mmol/mmol | $\eta$ inh | m.p. or C-LC |
|---|---|---|---|
| 31 | 4.0/1.0 | 2.42 | 240 - 280 |
| 32 | 2.5/2.5 | 2.33 | |
| 33 | 1.0/4.0 | 1.82 | 190 - 290 |

Examples 34 through 36

Polymerization was carried out in a manner similar to Example 7 except that trans-1,4-cyclohexanedicarboxylic acid (2.5 to 1.25 mmols) and isophthalic acid or terephthalic acid (0 or 1.25 mmols) were used in place of trans-1,4-cyclohexanedicarboxylic acid (2.5 mmols) and p-hydroxybenzoic acid (2.5 mmols) and m-hydroxybenzoic acid (2.5 mmols) or p-hydroxybenzoic acid (5 mmols) and methylhydroquinone (2.5 mmols) were used in place of p-hydroxybenzoic acid (5 mmols). The results are shown in Table 5.

### Table 5

| Example No. | Dicarboxylic Acid mmol/mmol | Oxycarboxylic Acid mmol/mmol | $\eta$ inh | m.p. or C-LC |
|---|---|---|---|---|
| 34 | A2.5 | D2.5/E2.5 | 1.69 | 180 - 230 |
| 35 | A1.25/B1.25 | D5.0 | 1.88 | 220 - 260 |
| 36 | A1.25/C1.25 | D5.0 | 1.51 | 180 - 210 |

Notes:  A : trans-1,4-cyclohexanedicarboxylic acid

B : isophthalic acid

C : terephthalic acid

D : p-hydroxybenzoic acid

E : m-hydroxybenzoic acid

8

Example 37 (stepwise reaction)

In a 3-necked flask reactor equipped with a nitrogen introducing tube, a cooling condenser and a dropping funnel was charged 1.31 g (11 mmols) of thionyl chloride. Next, nitrogen was glown through the nitrogen introducing tube and ice cooled. While stirring 10 ml of pyridine was added through the dropping funnel over 10 minutes.

After stirring for 30 minutes, a solution of 0.4305 g (2.5 mmols) of trans-1,4-cyclohexanedicarboxylic acid and 0.6907 g (5 mmols) of p-hydroxybenzoic acid in 10 ml of pyridine was added to the mixture over 10 minutes. Subsequently, the reaction mixture was stirred for 20 minutes under ice cooling. (The foregoing step is made "first step activation".)

A solution of methylhydroquinone (2.5 mmols) in 10 ml of pyridine was added to the aforesaid reaction mixture over 10 minutes. (The foregoing step is made "second step activation".) The reaction mixture after the second step activation was reacted at room temperature for 30 minutes and then reacted at 80°C for 5 hours.

Procedures after completion of the reaction described above were conducted in a manner similar to Example 1 to give a polymer having a logarithmic viscosity ($\eta$ inh) of 3.24 dl/g and a melting point (m.p.) of 240 - 275°C.

Examples 38 through 46

Stepwise activation reaction was carried out in a manner similar to Example 37 except for using a number of carboxylic acids, hydroquinones and oxyacids in combination. Conditions for the production and the results are shown in Table 6.

Table 6

| Example No. | First Step Activation Reaction mmol/mmol | Second Step Activation Reaction mmol | Third Step Activation Reaction mmol | $\eta$ inh | m.p. or C-LC |
|---|---|---|---|---|---|
| 38 | A2.5/B2.5 | C5 | - | 2.74 | 240 - 275 |
| 39 | A2.5 | C5/B5 | - | 3.22 | 190 - 215 |
| 40 | A2.5/C5 | D2.5 | - | 1.75 | 190 - 210 |
| 41 | A2.5 | C5 | D2.5 | 1.92 | |
| 42 | A2.5 | C5 | - | 1.60 | 170 - 210 |
| 43 | A2/B2 | F3/B3 | - | 0.44 | |
| 44 | A2/B5 | F3 | - | 0.41 | |
| 45 | A2.5/E2.5 | F2.5/E2.5 | - | 1.05 | |
| 46 | F2.5/E5 | A2.5 | - | 0.78 | |

Notes:   A : trans-1,4-cyclohexanedicarboxylic acid

B : methylhydroquinone

C : p-hydroxybenzoic acid

D : phenylhydroquinone

E : chlorohydroquinone

F : cis-1,4-cyclohexanedicarboxylic acid

While the invention has been described in detail and with reference to specific embodiments thereof, it will be apparent to one skilled in the art that various changes and modifications can be made therein without departing from the spirit and scope thereof.

## Claims

1. A process for producing a polyester which comprises condensing a cyclohexanedicarboxylic acid and an aromatic diol using, as condensed agent, thionyl chloride and pyridine in combination.

2. A process according to claim 1 in which an aromatic oxycarboxylic acid is co-condensedwith the dicarboxylic acid and diol.

3. A process according to claim 1 or claim 2 in which the cyclohexanedicarboxylic acid is trans- or cis-cyclohexane-1,4-dicarboxylic acid.

4. A process according to any one of claims 1-3 in which the aromatic diol is hydroquinone, methylhydroquinone, chlorohydroquinone, phenylhydroquinone or bisphenol A.